# EUROPÄISCHE PATENTSCHRIFT

(11) **EP 2 227 379 B1**
(45) Veröffentlichungstag und Bekanntmachung des Hinweises auf die Patenterteilung: **20.02.2013**
(21) Anmeldenummer: 08856106.3
(22) Anmeldetag: 08.12.2008
(51) Int. Cl.: B29C 70/56, B29B 11/16, B29C 70/30

(54) **VERFAHREN ZUR HERSTELLUNG EINES FASERVERBUNDWERKSTOFF-VORFORMLINGS AUS EINEM LAMINAT MIT ZUMINDEST ZWEI PREPREG-LAGEN SOWIE HERSTELLUNGSVORRICHTUNG FÜR EIN DERARTIGES VERFAHREN**
METHOD FOR THE PRODUCTION OF A FIBER-REINFORCED COMPOSITE PREFORM FROM A LAMINATE, HAVING AT LEAST TWO PREPREG LAYERS, AND PRODUCTION DEVICE FOR SUCH A METHOD
PROCÉDÉ DE PRODUCTION D'UNE ÉBAUCHE EN MATÉRIAU COMPOSITE RENFORCÉ PAR FIBRES À PARTIR D'UN STRATIFIÉ COMPORTANT AU MOINS DEUX COUCHES PRÉIMPRÉGNÉES ET DISPOSITIF DE PRODUCTION POUR UN PROCÉDÉ DE CE TYPE

(30) Priorität: 06.12.2007 US 992740 P; 06.12.2007 DE 102007058727
(43) Veröffentlichungstag der Anmeldung: 15.09.2010
(73) Patentinhaber: Airbus Operations GmbH, 21129 Hamburg (DE)
(72) Erfinder: GRÄBER, Rainer, 22765 Hamburg (DE)
(74) Vertreter: Schatt, Markus F.
(86) Internationale Anmeldenummer: PCT/EP2008/010398
(87) Internationale Veröffentlichungsnummer: WO 2009/071331

(56) Entgegenhaltungen:
- EP-A- 1 393 875
- DE-A1- 4 014 549
- GB-A- 2 061 177

## Beschreibung

Die Erfindung betrifft ein Verfahren zur Herstellung eines Faserverbundwerkstoff (FVW)-Vorformlings aus einem Laminat mit zumindest zwei Prepreg-Lagen sowie eine Herstellungsvorrichtung zur Verformung eines Halbzeugs zur Herstellung eines FVW-Bauteils nach diesem Verfahren.

Die EP 1 393 875 A1 beschreibt ein Verfahren und eine Form zum Umformen von Verbundmaterialien. Hierzu wird eine Pressvorrichtung zum Umformen einer Laminatstruktur gelehrt. Die Pressvorrichtung weist ein Presswerkzeug auf, das von einem mittleren Abschnitt wegragende seitliche Endstücke aus einem elastischen Material aufweist. Bei der Pressverform-Bewegung wird das Presswerkzeug gegen eine Gegenlage mit einer darauf liegenden Laminatstruktur gefahren, die derart auf der Gegenlage angeordnet ist, dass sich entgegengesetzt zueinander gelegene Abschnitte über die Gegenlage hinaus erstrecken. Die Gegenlage ist derart ausgebildet, dass bei der Pressbewegung des Presswerkzeugs die sich über die Gegenlage hinaus erstreckenden Abschnitte der Laminatstruktur seitlich der Gegenlage hinab gedrückt werden. Die elastischen Endstücke pressen dabei die seitlich der Gegenlage mit zunehmender Pressbewegung entstehenden Krümmungsbereiche der Laminatstruktur in deren Dickerichtung zusammen. Bei der Pressbewegung gleiten die Anlageflächen der Endstücke über der diesen zugewandten Oberfläche der Laminatstruktur.

In der US 2 378 642 ist die Herstellung von Produkten aus Naturfaser durch einen stempelartigen Formgebungsprozess beschrieben, bei dem ein erstes Presswerkzeugteil mit einer dreidimensionalen Verformungskontur gegen ein zweites Presswerkzeugteil mit einer dreidimensionalen Verformungskontur, die komplementär zu der Verformungskontur des ersten Presswerkzeugteils gebildet ist, gefahren wird. Durch ein Pressverfahren wird ein zwischen diesen eingelegtes Faserhalbzeug dreidimensional verformt.

Ein mehrstufiges Verfahren zur Herstellung eines strukturellen Verbundträgers für Flugzeuge ist aus der DE 60 2005 002 300 T2 bekannt.

Für eine Vielzahl von Anwendungen der Luft- und Raumfahrttechnik, im Fahrzeugbau und anderen Bereichen werden vorimprägnierte, auch als Prepreg bezeichnete Faserverbundwerkstoffe bestehend aus mit einer Harzmischung, unter Einhaltung eines definierten Faservolumengehalts, getränkten Verstärkungsfasern verwendet. Zur Steigerung der Produktivität, Flexibilität und Wirtschaftlichkeit moderner Verfahren zur Herstellung von Faserverbundwerkstoffbauteilen ist es aus dem allgemeinen Stand der Technik bekannt, derartige Prepregs mittels einem Warmumformverfahren umzuformen. Hierbei wird das mehrschichtige Prepreglaminat auf eine Umformtemperatur erwärmt, um die Fließeigenschaften der Harzmischung zu verbessern. Anschließend wird das Prepreglaminat umgeformt, wobei die Laminatschichten (Laminatlagen) des Laminats aufeinander abgleiten. Das Warmumformen des Laminats erfolgt beispielsweise mittels eines Einfach- oder Doppel-Diaphragma-Umformverfahrens, Pressumformverfahrens oder Biegeverfahrens. Diaphragma-Umformverfahren verwenden eine Werkzeugform und eine flexible Membran (Diaphragma), die durch Teilevakuieren eine Verformung des Laminats bewirken. Das Pressumformverfahren erfolgt durch ein Zusammenpressen von erwärmten Formwerkzeugen.

Ein Verfahren und eine Vorrichtung zur Warmumformung von Verbundwerkstoffplatten mittels einer Biegetechnik ist beispielsweise aus der WO 90/11882 bekannt. Diese herkömmliche Biegevorrichtung verwendet zwei Biegeplatten, zwischen denen das Laminat angeordnet ist. Während des Umformens wird mittels eines Pressstempels und einer Druckwalze eine Zugkraft in Richtung des freien Plattenrandes des Laminats aufgebracht, um eine Spannung der Laminatschichten zu erreichen.

Nachteilig bei derartigen Verfahren ist, dass das interlaminare Gleiten der Laminatschichten, insbesondere bei großen Schenkellängen und Bauteildicken des Faserverbundwerkstoffbauteils, mit einem großen Widerstand verbunden ist, so dass es bei der Herstellung des Bauteils zu einem Abheben und Ausbeulen der inneren Laminatschichten in Folge von Druckspannungen am Innenradius des Bauteils kommen kann.

Der Erfindung liegt die Aufgabe zugrunde, ein Verfahren zur Herstellung eines FVW-Vorformlings aus einem Laminat mit insgesamt zumindest zwei Trockenfasergewebe-Lagen, das mit Bindern zusammengehalten wird, und/oder mit zumindest zwei Prepreg-Lagen sowie eine Herstellungsvorrichtung zur Verformung eines Halbzeugs zur Herstellung eines FVW-Bauteils nach diesem Verfahren bereitzustellen, wobei ein Abheben und Aufwerfen der inneren Laminat-Lagen während dem Umformen verhindert wird.

Diese Aufgabe wird mit den Merkmalen der unabhängigen Ansprüche gelöst. Weitere Ausführungsformen sind in den auf diese rückbezogenenen Unteransprüchen angegeben.

Erfindungsgemäß ist insbesondere ein Verfahren zur Herstellung eines FVW-Vorformlings aus einem Laminat mit insgesamt zumindest zwei Trockenfasergewebe-Lagen, das mit Bindern zusammengehalten wird, und/oder Prepreg-Lagen, vorgesehen, bei dem
■ zwei Laminatabschnitte durch Klemmvorrichtungen eingespannt werden,
■ ein Umformen des Laminats unter Ausbildung einer Krümmung erfolgt, wobei
■ die Klemmkräfte in der ersten und der zweiten Klemmvorrichtung so groß sind, dass innerhalb der jeweiligen Klemmvorrichtung kein Gleiten der Laminat-Lagen relativ zueinander erlaubt wird.

Mit dem erfindungsgemäßen Verfahren oder mit der erfindungsgemäßen Herstellungsvorrichtung ist es möglich, dass das Laminatmaterial nicht langgezogen, sondern gebogen wird, und zwar so, dass die Laminatlagen nicht gegenseitig verrutschen oder aneinander bzw. übereinander gleiten. Dadurch werden Gleitbewegungen zwischen den Laminatschichten beim Umformprozess und insbesondere daraus entstehende Beschädigungen der Oberfläche der Laminatstruktur und somit eine Beeinträchtigung der Qualität des herzustellenden Bauteils vermieden. Erfindungsgemäß erfolgt innerhalb der Klemmvorrichtung keine oder nur eine sehr geringe Gleitbewegung zwischen dem Laminat und der Klemmvorrichtung und/oder zwischen Laminatschichten, darüber hinaus liegt der Krümmungsbereich zur Außenseite hin frei.

Erfindungsgemäß ist insbesondere ein Verfahren zur Herstellung eines FVW-Vorformlings aus einem Laminat mit insgesamt zumindest zwei Trockenfasergewebe-Lagen vorgesehen, das mit Bindern zusammengehalten wird, und/oder Prepreg-Lagen mit den Schritten:
■ Einspannen von zwei entgegengesetzt zueinander gelegenen Randabschnitten in jeweils eine Klemmvorrichtung,
■ Anordnung des Laminats auf einem Formstück und
■ Zugbeaufschlagung des Laminats, so dass sich die Kontur des Formstücks abschnittsweise an dem Laminat ausbildet

Nach einer Ausführungsform der Erfindung wird bei dem Verfahren zur Herstellung eines FVW-Vorformlings die Zugspannung im Laminat durch eine Bewegung des Formstücks quer zur Längsrichtung des Laminats erzeugt. Hierzu ist die Herstellungsvorrichtung für die Durchführung des Verfahrens mit einer Betätigungseinrichtung und einer Bewegungsmechanik versehen, mit der das Formstück bewegt werden kann.

Nach einem weiteren Ausführungsbeispiel der Erfindung weist das erfindungsgemäße Verfahren insbesondere die Schritte auf:
■ Einspannen zumindest eines ersten Randabschnitts des Laminats in eine mittels einer Bewegungsmechanik gegenüber einem Formstück bewegbare erste Klemmvorrichtung und eines entgegengesetzt zu dem ersten Randabschnitt gelegenen zweiten Randabschnitts des Laminats in eine weitere Klemmvorrichtung, wobei die erste Klemmvorrichtung von der weiteren Klemmvorrichtung aus gesehen jenseits eines gerundeten Oberflächenbereichs des Formstücks gelegen ist,
■ Ausüben einer Zugkraft durch die erste Klemmvorrichtung gegenüber der zweiten Klemmvorrichtung über den zwischen den Klemmvorrichtungen gelegenen Bereich des Laminats und gleichzeitig Bewegen der ersten Klemmvorrichtung in einer Richtung, die von der zweiten Klemmvorrichtung bis zu einer Stelle weg gerichtet ist, an der der gerundete Oberflächenbereich dem Laminat zwischen der ersten Klemmvorrichtung und der zweiten Klemmvorrichtung in dessen Längsrichtung gesehen eine Krümmung aufprägt,
■ wobei die Klemmkräfte in der ersten und der weiteren Klemmvorrichtung mindestens so groß sind, dass die bei Ausübung einer vorgegebenen maximalen Zugkraft auf das Laminat innerhalb der jeweiligen Klemmvorrichtung kein Gleiten der Laminat-Lagen relativ zueinander erlaubt.

Das erfindungsgemäße Verfahren zur Herstellung eines FVW-Vorformlings aus einem Laminat mit insgesamt zumindest zwei Trockenfasergewebe-Lagen, das mit Bindern zusammengehalten wird, und/oder Prepreg-Lagen, kann insbesondere die Schritte aufweisen:
■ Einspannen eines ersten Randabschnitts des Laminats in eine mittels einer Bewegungsmechanik gegenüber einem Formstück bewegbare erste Klemmvorrichtung und eines entgegengesetzt zu dem ersten Randabschnitt gelegenen zweiten Randabschnitts des Laminats in eine weitere Klemmvorrichtung, wobei die erste Klemmvorrichtung von der weiteren Klemmvorrichtung aus gesehen jenseits eines gerundeten Oberflächenbereichs des Formstücks liegt,
■ Ausüben einer Zugkraft von der ersten Klemmvorrichtung gegenüber der zweiten Klemmvorrichtung über den zwischen den Klemmvorrichtungen gelegenen Bereich des Laminats hinweg, wobei die erste Klemmvorrichtung in eine vorbestimmte Richtung bewegt wird, so dass das Formstück durch seinen gerundeten Oberflächenbereich dem Laminat zwischen der ersten Klemmvorrichtung und der zweiten Klemmvorrichtung, in Längsrichtung des Laminats gesehen, eine Krümmung aufprägt,
■ wobei die Klemmkräfte in der ersten und der zweiten Klemmvorrichtung so groß sind, dass kein Gleiten der Laminat-Lagen relativ zueinander erlaubt wird.

Dabei kann weiterhin vorgesehen sein, dass die erste Klemmvorrichtung nach unten und in Richtung einer der ersten Klemmvorrichtung zugewandten ersten Seitenfläche des Formstücks bewegt wird, bis das Laminat abschnittsweise an der ersten Seitenfläche anliegt. Dabei kann weiterhin vorgesehen sein,
■ dass vor dem Einspannen des Endabschnitts des Laminats) in die erste Klemmvorrichtung der erste Randabschnitt gegenüber dem neben dem Endabschnitt gelegenen Bereich unter Ausbildung eines zwischen diesen Bereichen gelegenen Krümmungsbereichs angewinkelt ist und dabei die Lagen aufgrund der Krümmung zueinander versetzt sind, und
■ dass die Lagen des ersten Endabschnitts in dieser versetzten Auflage in der ersten Klemmvorrichtung zusammen geklemmt werden.

Bei dem Verfahren kann vorgesehen sein, dass das Bewegen der ersten Klemmvorrichtung unter Ausübung einer Zugkraft eine Bewegung der ersten Klemmvorrichtung in Richtung der Seitenfläche des Formstücks nach unten umfasst, bis das Laminat abschnittsweise an einer der ersten Klemmvorrichtung zugewandten ersten Seitenfläche anliegt. Weiterhin kann dabei der Winkel, um den der in der ersten Klemmvorrichtung gelegene Randabschnitt gegenüber dem vor der ersten Klemmvorrichtung gelegenen Bereich des Laminats gedreht ist, im Bereich ± 10 Grad gleich dem Winkel sein, in dem die zweite Seitenfläche gegenüber der Auflagefläche verläuft.

Auch kann dabei vorgesehen sein, dass vor dem Bewegen der ersten Klemmvorrichtung zur Verformung des Laminats unter Ausübung einer Zugkraft oder, in einem speziellen Ausführungsbeispiel, vor dem Einspannen des Laminats in die Klemmvorrichtungen ein Anordnen des Laminats auf eine Auflagefläche eines Formstücks erfolgt, das in der Richtung von der weiteren zur ersten Klemmvorrichtung gesehen ineinander übergehend die Auflagefläche, den zwischen diesen gelegenen gerundeten Oberflächenbereich und die erste Seitenfläche aufweist.

Vor dem Einspannen des Endabschnitts des Laminats in die erste Klemmvorrichtung kann vorgesehen sein, dass der erste Endabschnitt gegenüber dem neben dem Endabschnitt gelegenen Bereich unter Ausbildung eines zwischen diesen Bereichen gelegenen Krümmungsbereichs angewinkelt ist und dabei die Lagen aufgrund der Krümmung zueinander versetzt sind, und dass die Lagen des ersten Endabschnitts in dieser versetzten Auflage in der ersten Klemmvorrichtung zusammen geklemmt werden. Dabei kann die Länge des Endabschnitts so gering vorgesehen sein, dass eine Versetzung der Lage des Endbereichs ohne Bildung eines Aufwerfens einer inneren Lage stattfindet.

Bei dem Verfahren kann der Endabschnitt gegenüber dem neben dem Endabschnitt gelegenen Bereich mittels eines Umformkems angewinkelt werden.

Das Anwinkeln des Endabschnitts gegenüber dem neben dem Endabschnitt gelegenen Bereich kann durch Drehung der ersten Klemmvorrichtung um eine Achse erfolgen, bei der der von der ersten Klemmvorrichtung aufgenommene Abschnitt des Laminats in seiner Längsrichtung gegenüber dem Bereich gewinkelt wird, der außerhalb der ersten Klemmvorrichtung und vor dieser gelegen ist. Dabei ist insbesondere eine geringere Klemmkraft eingestellt, die aufgrund der Drehung der Lagen eine Versetzung der Lagen zueinander erlaubt.

Das Laminat kann ein ringförmiges Segment eines durch Wickeln eines Halbzeugs auf einen Wickelkern hergestellten ringförmigen Vorformling-Laminats sein.

Bei dem erfindungsgemäßen Verfahren zur Herstellung eines FVW-Vorformlings kann die Auflagefläche und/oder die Seitenfläche eben ausgebildet sein. Alternativ oder zusätzlich kann die Auflagefläche und/oder die erste Seitenfläche eine in der Zugrichtung gesehen gekrümmte Oberfläche haben. Auch kann die Auflagefläche und/oder die erste Seitenfläche eine quer zur Zugrichtung verlaufende dreidimensionale Kontur haben, so dass der Vorformling eine quer zur Zugrichtung gesehen dreidimensionale Verformung erhält.

Weiterhin kann bei dem erfindungsgemäßen Verfahren zur Herstellung eines FVW-Vorformlings vorgesehen sein, dass bei dem Bewegen der ersten Klemmvorrichtung mittels einer weiteren Bewegungsmechanik auch die zweite Klemmvorrichtung, die von der ersten Klemmvorrichtung aus gesehen jenseits eines weiteren gerundeten Oberflächenbereichs des Formstücks gelegen ist, in einer Richtung entgegen gesetzt zur Bewegungsrichtung der ersten Klemmvorrichtung bis zu einer Stelle bewegt wird, an der der zweite gerundete Oberflächenbereich des Formstücks, der von der ersten Klemmvorrichtung aus gesehen jenseits des ersten Oberflächenbereichs gelegen ist, dem Laminat zwischen dem ersten gerundeten Oberflächenbereich und der zweiten Klemmvorrichtung in dessen Längsrichtung gesehen eine Krümmung aufprägt. Die Bewegung der zweiten Klemmvorrichtung kann dabei gleichzeitig zur Bewegung der ersten Klemmvorrichtung erfolgen. Auch kann das Bewegen der weiteren Klemmvorrichtung eine Bewegung der weiteren Klemmvorrichtung in Richtung einer entgegen gesetzt zur ersten Seitenfläche gelegenen und der zweiten Klemmvorrichtung zugewandten zweiten Seitenfläche des Formstücks nach unten umfassen, bis das Laminat abschnittsweise an der zweiten Seitenfläche anliegt.

Bei diesem Verfahren zur Herstellung eines FVW-Vorformlings kann vorgesehen sein,
■ dass vor dem Einspannen des zweiten Endabschnitts des Laminats in die zweite Klemmvorrichtung der zweite Endabschnitt gegenüber dem neben dem zweiten Endabschnitt gelegenen Bereich unter Ausbildung eines zwischen diesen Bereichen gelegenen Krümmungsbereichs angewinkelt ist und dabei die Lagen aufgrund der Krümmung zueinander versetzt sind, und
■ dass die Lagen des Endabschnitts in dieser versetzten Auflage in der ersten Klemmvorrichtung zusammen geklemmt werden.

Dabei kann vorgesehen sein, dass die Länge des zweiten Endabschnitts so gering ist, dass eine Versetzung der Lage des Endbereichs ohne Bildung eines Aufwerfens einer inneren Lage stattfindet. Weiterhin kann bei dem Verfahren vorgesehen sein, dass der Winkel um den in der zweiten Klemmvorrichtung gelegenen Randabschnitt gegenüber dem vor der ersten Klemmvorrichtung gelegenen Bereich des Laminats im Bereich ± 10 Grad gleich dem Winkel ist, in dem die zweite Seitenfläche gegenüber der Auflagefläche verläuft. Bei dem Schritt des Anwinkelns des zweiten Endabschnitts gegenüber dem neben dem Endabschnitt gelegenen Bereich kann dieses Anwinkeln mittels eines Umformkems erfolgen. Insbesondere kann das Abwinkeln des zweiten Endabschnitts gegenüber dem neben dem Endabschnitt gelegenen Bereich durch Drehung der zweiten Klemmvorrichtung um eine Achse erfolgen, bei welcher der von der zweiten Klemmvorrichtung aufgenommene zweite Endabschnitt des Laminats in seiner Längsrichtung gegenüber dem Bereich gewinkelt wird, der außerhalb der zweiten Klemmvorrichtung und vor dieser gelegen ist.

Die zweite Seitenfläche kann zumindest abschnittsweise eben ausgebildet sein oder zumindest abschnittsweise eine in der Zugrichtung gesehen gekrümmte Oberfläche haben. Weiterhin kann die Auflagefläche und/oder die erste Seitenfläche eine quer zur Zugrichtung verlaufende dreidimensionale Kontur haben, so dass an dem Vorformling eine quer zur Zugrichtung gesehen dreidimensionale Verformung erhält.

Nach einem weiteren Ausführungsbeispiel der Erfindung ist eine Herstellungsvorrichtung zur Verformung eines Halbzeugs zur Herstellung eines FVW-Bauteils vorgesehen, aufweisend:
■ eine Formstück-Aufnahme zur Aufnahme eines Formstücks für die Umformung des Halbzeugs,
■ eine erste und eine zweite Aufnahmevorrichtung jeweils zur Aufnahme eines Randbereichs eines Laminats, die jeweils eine Klemmvorrichtung zum Einklemmen des Halbzeugs aufweisen,
■ eine Bewegungsmechanik, die mittels einer Betätigungsvorrichtung ansteuerbar und an der die erste Aufnahmevorrichtung gekoppelt ist, wobei die Bewegungsmechanik derart gestaltet ist, dass die erste Aufnahmevorrichtung eine vorbestimmte Zugkraft gegen die Richtung, die zur zweiten Aufnahmevorrichtung weist, aufbringen kann und gleichzeitig eine Bewegung relativ zur Formstück-Aufnahme ausführen kann.

Weiterhin kann vorgesehen sein, dass mit der Bewegungsmechanik eine Antriebsvorrichtung gekoppelt ist, die mittels der Betätigungsvorrichtung ansteuerbar und an der die erste Aufnahmevorrichtung gekoppelt ist, wobei die Bewegungsmechanik und die Antriebsvorrichtung derart gestaltet sind, dass die erste Aufnahmevorrichtung eine vorbestimmte Zugkraft gegen die Richtung, die zur zweiten Aufnahmevorrichtung weist, aufbringen kann und gleichzeitig eine Bewegung relativ zur Formstück-Aufnahme ausführen kann.

Die von der Bewegungsmechanik ausgeführte Bewegung kann dabei in einer Ebene gelegen sein. Die Antriebsvorrichtung kann geeignet sein, während der von der Bewegungsmechanik ausgeführten Bewegung auf das Laminat eine Zugkraft mit einem vorbestimmten Betrag auszuüben. Die Zugkraft kann mittels einer insbesondere mit der Antriebsvorrichtung gekoppelten Federeinrichtung aufgebracht werden, mit der eine Mindest-Zugkraft während der Umform-Bewegung erhalten bleibt. Auch kann die Bewegungsmechanik derart gestaltet sein, dass die Bewegungsbahn einstellbar ist. Die Bewegungsbahn kann dabei bogenförmig sein. Weiterhin kann die erste Aufnahmevorrichtung eine Drehvorrichtung aufweisen, mit der die erste Aufnahmevorrichtung um eine Achse, die quer zur Verbindung zwischen der ersten und der zweiten Aufnahmevorrichtung verläuft, drehbar ist.

Zusätzlich kann vorgesehen sein, dass an die zweite Aufnahmevorrichtung eine Bewegungsmechanik gekoppelt ist, die mittels einer Betätigungsvorrichtung ansteuerbar ist, wobei die Bewegungsmechanik und die Antriebsvorrichtung derart gestaltet sind, dass die zweite Aufnahmevorrichtung eine vorbestimmte Zugkraft gegen die Richtung, die zur ersten Aufnahmevorrichtung weist, aufbringen kann und gleichzeitig eine Bewegung relativ zur Formstück-Aufnahme ausführen kann. Weiterhin kann vorgesehen sein, dass die von der Bewegungsmechanik ausgeführte Bewegung der zweiten Aufnahmevorrichtung in einer Ebene gelegen ist. Insbesondere kann die Antriebsvorrichtung der zweiten Aufnahmevorrichtung so gestaltet sein, dass diese geeignet ist, auf das Laminat eine Zugkraft mit einem vorbestimmten Betrag auszuüben. Auch die Antriebsvorrichtung der zweiten Aufnahmevorrichtung kann eine Federeinrichtung aufweisen, mit der eine Zugkraft entgegen der ersten Aufnahmevorrichtung aufgebracht wird, so dass eine Mindest-Zugkraft während des Umformens erhalten bleibt. Die Bewegungsmechanik der zweiten Aufnahmevorrichtung kann derart gestaltet sein, dass die Bewegungsbahn einstellbar ist. Insbesondere kann vorgesehen sein, dass die Herstellungsvorrichtung derart gestaltet ist, dass eine Zugkraft in Richtung des vor der jeweiligen Klemmvorrichtung oder Aufnahmevorrichtung freiliegenden Abschnitts ausgeübt wird und gleichzeitig eine vorgegebene Bewegungsbahn ausgeführt wird. Generell kann die Bewegungsbahn der zweiten Aufnahmevorrichtung bogenförmig ist. Weiterhin kann die zweite Aufnahmevorrichtung eine Drehvorrichtung aufweisen, mit der die zweite Aufnahmevorrichtung um eine Achse, die quer zur Verbindung zwischen der ersten und der zweiten Aufnahmevorrichtung verläuft, drehbar ist.

Die Betätigungsvorrichtung und der Bewegungsmechanik mit den vorgenannten Alternativen können in analoger Weise auch für die Bewegung des Formstücks vorgesehen sein.

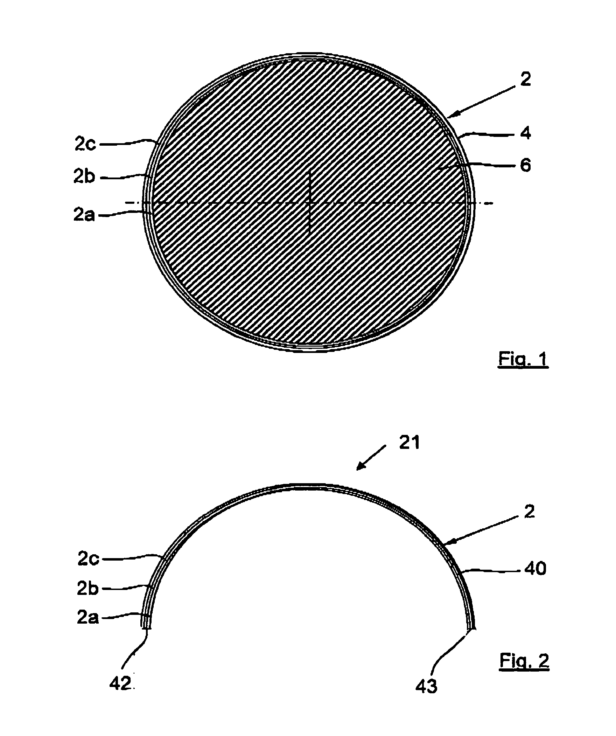

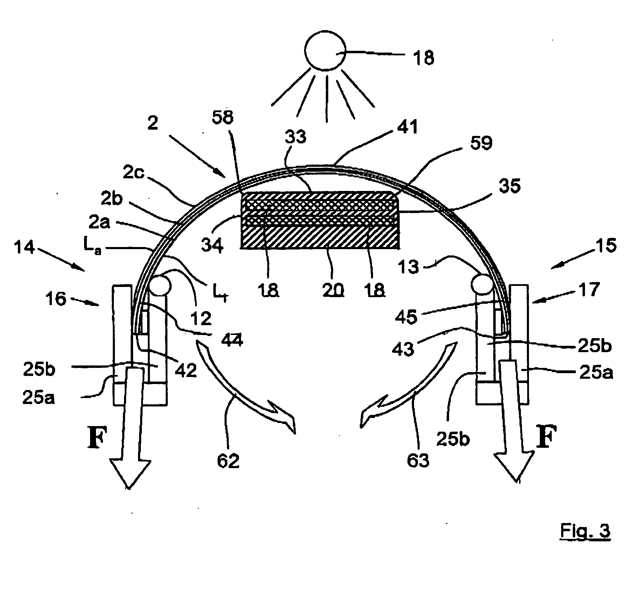

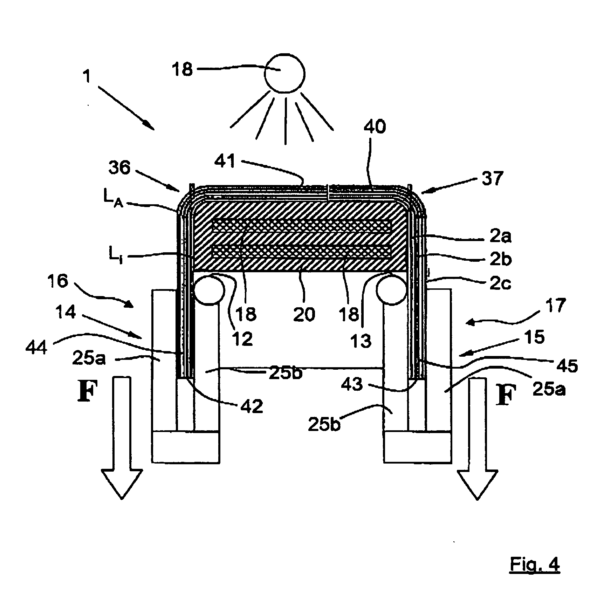

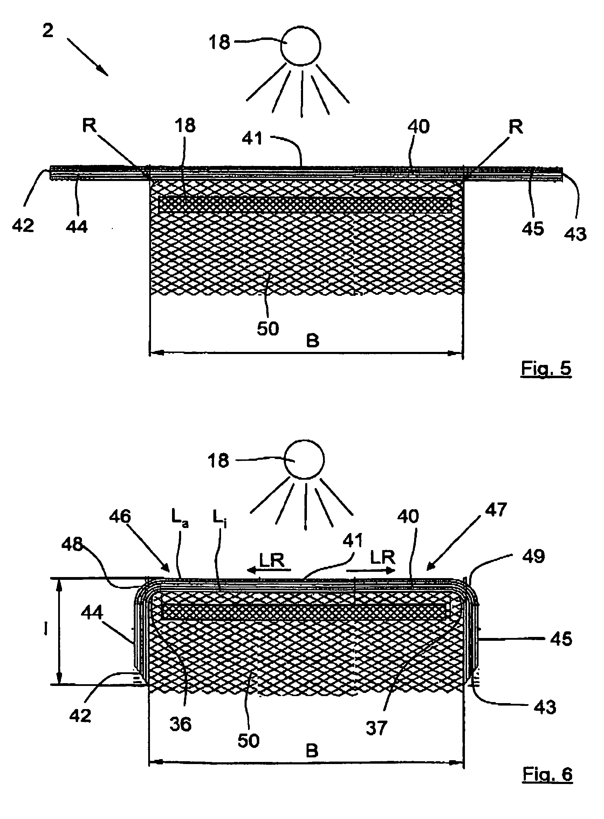

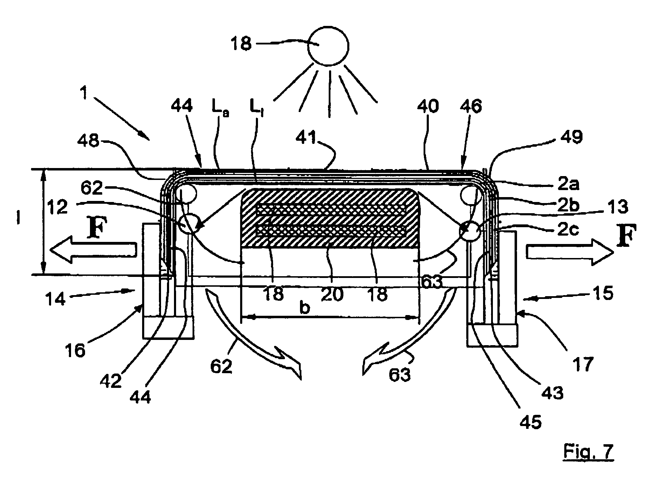

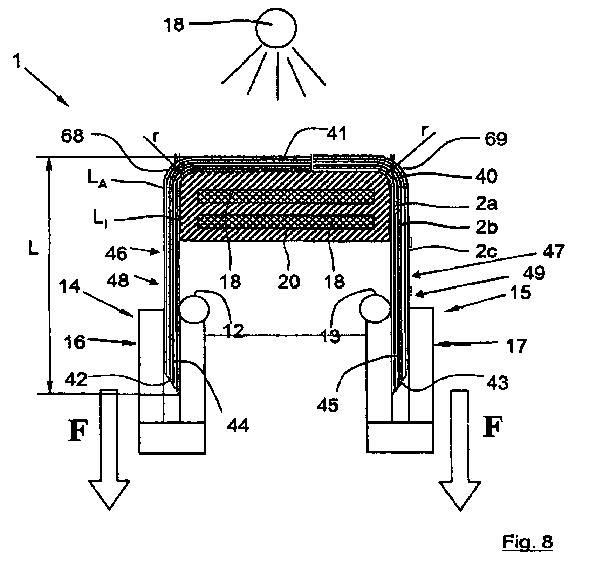

Im Folgenden werden Ausführungsbeispiele der Erfindung an Hand der beiliegenden Figuren beschrieben, die zeigen:
■ Figur 1 eine Seitenansicht eines Wickelkerns mit aufgewickeltem Laminat mit mehreren Lagen als optionaler erster Schritt des erfindungsgemäßen Verfahrens zur Herstellung eines Vorformlings für ein Faserverbundwerkstoff (FVW)-Bauteil gemäß einem ersten erfindungsgemäßen Ausführungsbeispiel;
■ Figur 2 eine Seitenansicht eines Segments des nach der Figur 1 gewickelten Vorformlings, das für nachfolgende Schritte des erfindungsgemäßen Verfahrens verwendet werden kann;
■ Figur 3 eine Seitenansicht einer Ausführungsform der erfindungsgemäßen Umformvorrichtung zur Herstellung eines FVW-Bauteils, in die ein aus dem Vorformling nach Figur 2 gebildetes Laminat eingelegt worden ist, wobei die Figur 3 den Zustand der Vorrichtung und des Laminats vor der Umformung zeigt;
■ Figur 4 die Ausführungsform der erfindungsgemäßen Umformvorrichtung nach der Figur 3 in derselben Seitenansicht mit dem Laminat nach der Umformung:
■ Figur 5 eine zu dem in den Figuren 1 und 2 gezeigten Verfahren zur Bildung des Laminats alternatives Verfahren mit einem ersten Schritt, wobei eine Seitenansicht einer Vorform-Vorrichtung mit aufgelegtem Laminat gezeigt ist;
■ Figur 6 eine Seitenansicht der Vorform-Vorrichtung nach der Figur 5 nach der Umformung des Vorformlings;
■ Figur 7 eine Seitenansicht einer Ausführungsform der erfindungsgemäßen Umformvorrichtung mit eingelegtem Vorformling aus Figur 6 vor der Umformung und
■ Figur 8 eine Seitenansicht der Umformvorrichtung nach der Figur 7 mit eingelegtem Vorformling nach der Umformung.

Bei dem erfindungsgemäßen Verfahren zur Herstellung eines Faserverbundwerkstoff(FVW)-Vorformlings 1, der in den Figuren 4 und 8 in einer herzustellenden Form gezeigt ist, wird mittels der Bewegung einer Klemmvorrichtung (16, 17) zumindest ein eingespannter Endabschnitt 44 bzw. 45 durch Anlage an einen gerundeten Oberflächenbereich 58 bzw. 59 unter Ausübung einer Zugkraft F quer zur Drehachse der Klemmvorrichtung angewinkelt (Figuren 3 sowie 7 und 8).

Optional kann vor diesem Verfahrensschritt zur Bildung eines Ausgangs-Vorformlings 2 in einem Ausgangszustand eine Vorkrümmung des Laminats insbesondere in der Umgebung eines bei den herzustellenden Bauteil vorzusehenden Krümmungsbereichs 68, 69 (Figur 8) durchgeführt werden, wie dies an Ausführungsbeispielen in den Figuren 1, 2 sowie 5, 6 gezeigt ist. Dabei wird ein Laminat 4, 40, das eine Mehrzahl oder eine Vielzahl von Laminatschichten oder Lagen 2a, 2b, 2c aufweist, z.B. in einem Zustand, der in den Figuren 2 bzw. 6 und 7 gezeigt ist, verformt.

Zur erfindungsgemäßen Herstellung eines FVW-Vorformlings 1 wird als Ausgangs-Laminat ein Laminat aus mit insgesamt zumindest zwei Trockenfasergewebe-Lagen, das mit Bindern zusammengehalten wird, und/oder Prepreg-Lagen verwendet. In diesem Sinne wird im Folgenden kurz von Laminat aus Lagen gesprochen.

Die Verformung kann eine Umformung sein und kann insbesondere zusätzlich auch eine dreidimensionale Verformung der Lagen des Ausgangs-Laminats sein.

Zur Bildung eines solchen Ausgangs-Vorformlings 2 in einem Ausgangszustand, können optional verschiedene Verfahren verwendet werden, von denen eines in den Figuren 1 und 2 und ein anderes in den Figuren 5 und 6 gezeigt ist.

Nach einer ersten Ausführungsform des erfindungsgemäßen Verfahrens zur Bildung eines Ausgangs-Vorformlings 2 zur Verwendung in der erfindungsgemäßen Herstellungsvorrichtung wird optional das für die nachfolgenden Umformschritte verwendete Laminat 4 zuvor in einem Wickelprozess hergestellt (Figur 1), bei dem z.B. ein Faserverbundwerkstoff auf einen Wickelkern 6 gewickelt wird, der insbesondere einen kreisförmigem Querschnitt haben kann (Figur 1). Der Wickelprozess kann auf verschiedene Weise durchgeführt werden. Es kann vorgesehen sein, eine Endlosfaser, einen Strang oder ein Band zunächst durch ein Tränkbad zu führen, mit dem Matrixwerkstoff zu benetzen und dann um dem Wickelkern 6 zu wickeln. Alternativ werden Prepreg-Bänder aufgewickelt, die anschließend ausgehärtet werden. Ferner ist es möglich den Kern mit ungetränkten Verbundwerkstoffen zu umwickeln, die anschließend in einem Harzinjektionsverfahren zur Bildung des Laminats getränkt werden. Die Schichtfolge und Anzahl der aufgebrachten Laminatschichten 2a, 2b, 2c hängt von den Anforderungen an das herzustellende Bauteil ab. Insbesondere wird der Faserverlauf an den Lastpfad des Bauteils angepasst, so dass die Herstellung leichter, hochfester Strukturen möglich ist. Der Wickelprozess und damit die Herstellung des Ausgangs-Vorformlings 2 kann weitgehend automatisiert durchgeführt werden.

Figur 2 zeigt eine Seitenansicht eines Segments des nach der Figur 1 gewickelten Ausgangs-Vorformlings 2 aus Figur 1, das aus dem im Wickelverfahren hergestellten ringförmigen Vorformling nach dem Wickeln in mehrere und vorzugsweise in zwei, jeweils ein Laminat 4 ausbildende Halbringe aufgetrennt und von dem Wickelkörper 6 abgenommen wird. Durch die Verwendung eines Laminat-Ringsegments als Ausgangs-Vorformling 2 für den Umformverfahren nach der Figur 3 sind, in Längsrichtung der Krümmung gesehen, die Endabschnitte 44, 45 gegenüber einem mittleren Bereich 41 in der Orientierung ihrer Längsrichtungen gedreht.

Alternativ kann das Vorformling-Laminat auch nach der Darstellung der Figuren 5 und 6 oder auf andere Weise gebildet werden.

Dabei kann vorgesehen sein, dass zumindest ein Endabschnitt 44, 45 gegenüber einem Bereich 46, 47 angewinkelt ist, der neben diesem Endabschnitt 44, 45 zum mittleren Bereich 41 gelegen ist, so dass ein zwischen dem Endabschnitt 44 bzw. 45 gelegener Bereich unter Ausbildung eines zwischen diesen Bereichen gelegenen Krümmungsbereichs 48 bzw. 49 angewinkelt ist.

Bei dem in den Figuren 5 und 6 dargestellten Beispiel erfolgt das Einbringen der Krümmung 48, 49 an Kantenlinien oder Kantenbereichen einer Formstück 20. Zur Ausbildung der Krümmung 48, 49 bzw. des Krümmungsbereichs 48, 49 kann das Vorformling-Laminat insbesondere gerundete Oberflächenbereiche 36, 37 aufweisen.

Die Querschnittsform des Formstücks 20 kann nach dem Anwendungsfall und der geforderten Form des FVW-Vorformlings 1 vorgesehen sein. In den Figuren 5 und 6 ist eine etwa rechteckige Querschnittsform dargestellt. Das Formstück 20 könnte z.B. auch eine trapezförmige, dreieckige oder hexagonale Querschnittsform haben.

Die gerundeten Kanten oder Oberflächenbereiche 36 bzw. 37 bilden bei entsprechender Anlage des Laminats an demselben die Krümmungsbereiche 48 bzw. 49 aus. Dieser Schritt kann auch mit zwei, in Längsrichtung oder Bearbeitungsrichtung gesehen entgegen gesetzt zu diesem gelegenen zweiten Endabschnitten vorgesehen sein, wie dies in den Figuren 5 und 6 dargestellt ist. Da bei diesem Schritt der jeweilige Endabschnitt in Querschnittsrichtung nicht eingespannt oder geklemmt ist, können sich die Lagen entsprechend ihres jeweiligen Radius im Krümmungsbereich 48 bzw. 49 zueinander in ihrer Längsrichtung versetzen.

Die Bildung eines Ausgangs-Vorformlings 2 mit einem Abwinkeln des Endabschnitts 44 bzw. 45 gegenüber dem neben dem Endabschnitt gelegenen Bereich 46 bzw. 47 kann auch, nach Einspannen eines Randabschnitts in eine Klemmvorrichtung 16, 17, durch Drehung der jeweiligen Klemmvorrichtung um eine Achse erfolgen, bei der sich der von der ersten Klemmvorrichtung 16 aufgenommene Abschnitt des Laminats in seiner Längsrichtung gegenüber dem Bereich gewinkelt wird, der außerhalb der ersten Klemmvorrichtung und vor dieser gelegen ist, wobei eine geringere, d.h. maximal zulässige Klemmkraft eingestellt ist, die aufgrund der Drehung der Lagen eine Versetzung der Lagen zueinander erlaubt.

Durch diese optionale Bildung eines Ausgangs-Vorformlings 2 wird nachfolgend zumindest ein freiliegender Endabschnitt 44 bzw. 45 mit Lagen, die gegenüber einer Ausgangslage mit anderer Krümmung und insbesondere mit einem, zumindest in diesen Bereichen, ebenen Verlauf zueinander versetzt sind, derart eingespannt oder festgeklemmt, dass sich die Lagen des Endabschnitts in weiteren Verfahrensschritten nicht mehr zueinander versetzen können. Durch die genannten Schritte zur Bildung eines Ausgangs-Vorformlings 2, der bereits eine Krümmung 48, 49 aufweist, wird die Gefahr der Bildung von Beulen oder eines Aufwerfens oder von Falten im Krümmungsbereich 48, 49 an den innen liegenden Lagen Li, d.h. den Lagen mit geringerem Durchmesser, gegenüber weiter außen liegenden Lagen La mit im Krümmungsbereich größeren Radien weiter verringert. Zu diesem Zweck soll vorzugsweise, bei der Verformung nach den Figuren 5 und 6 die Länge des jeweiligen Endabschnitts 44 bzw. 45 in Längsrichtung LR gesehen, abhängig vom Material der verwendeten Prepreg-Lagen, einen vorbestimmten Maximal-Betrag nicht überschreiten, ab dem ein Aufwerfen oder eine Beulung von innen liegenden Lagen gegenüber äußeren Lagen im jeweiligen Krümmungsbereich 48 bzw. 49 auftritt. Dadurch, das auf einer Seite des Laminats zunächst ein Schenkel mit einer geringeren Länge **I** (Figur 6) durch Anwinkeln gebildet wird und im nachfolgenden Schritt aus diesem Schenkel ein Schenkel des herzustellenden Bauteils mit einer größeren Länge L (Figur 8) mittels der mit Ausübung einer Zugkraft auf das Laminat bewegten Klemmvorrichtung 14, 16 gebildet wird, wird erreicht: in dem ersten Schritt eine Verschiebung von Lagen zueinander über eine Länge, bei der die Anwinklung des Schenkels noch kein Aufwerfen oder Beulen innerer Lagen bewirkt; und in dem zweiten Schritt wird die Verschiebung der Lagen zueinander über die größere Schenkel-Klänge L des herzustellenden Bauteils verteilt. Auch dabei erfolgt, solange der Unterschied der Längen L und I nicht zu groß gewählt ist, wiederum keine Aufwerfen oder Beulen von inneren Lagen des Laminats.

Als Ausgangs-Vorfomling 2 für das Verfahren auch nach den Figuren 5 und 6 kann auch ein Vorformlings-Segment nach der Figur 2 verwendet werden.

Das Umformen des FVW-Vorformlings 1 kann mittels einem Warmumformverfahren erfolgen, um die gemäß Figur 5 überstehenden Endabschnitte 44, 45 des Laminats 40 umzuformen. Das Warmumformen des plattenförmigen Laminats 40 kann beispielsweise durch ein Einfach- oder Doppel-Diaphragma-Umformverfahren erfolgen. Hierbei gleiten die Lagen 2a, 2b, 2c des Laminats 40 aufeinander, wobei die Verschiebungen an Schenkel-Enden 42, 43 auslaufen, so dass der in der Figur 6 gezeigte "Bucheffekt" an den Schenkelenden 42, 43 des etwa U-förmigen FVW-Vorformlings 1 auftritt. Bei den Diaphragma-Umformverfahren wird zwischen dem Einfach- (SD-Verfahren) und dem Doppeldiaphragma-Verfahren (DD-Verfahren) mit einem Diaphragma bzw. zwei Diaphragmen unterschieden. Als Diaphragma wird jeweils eine flexible Membran (nicht dargestellt), beispielsweise eine Tygavac® LRB100- oder Mosites-Mernbran bezeichnet, die einen durch Vakuum evakuierten Raum von der Atmosphäre trennt. Beim SD-Verfahren wird zunächst der Umformkem 50 auf einem Vakuumtisch platziert. Anschließend wird das Laminat 40 auf das Formstück 20 in der gewünschten Lage positioniert, fixiert und mittels einer Heizvorrichtung 18 aufgewärmt (siehe Figur 5). Zum Erwärmen des Laminats 40 wird dieses weiterhin von oben konvektiv mit Wärme bestrahlt. Sowohl beim SD- als auch beim DD-Verfahren wird dabei die Wärme zunächst mittels Wärmestrahlung auf das obere Diaphragma und von dort per Wärmeleitung durch die Membran in das Gelege übertragen. Als Wärmequelle werden vorzugsweise Keramikstrahler, Glühbirnen oder IR-Strahler verwendet. Zusätzlich kann der Umformtisch von unten, d.h. von dem Formstück 20 her, z.B. über Wärmestrahler, beispielsweise IR-Strahler erhitzt werden. Danach wird das Diaphragma auf dem gesamten Aufbau abgelegt und mit dem Vakuumtisch luftdicht verbunden. Anschließend wird durch eine Vakuumleitung zwischen dem Diaphragma und dem Vakuumtisch ein Unterdruck erzeugt, so dass der Umgebungsdruck das Laminat 40 an das Formstück 20 drückt und auf diese Weise umformt.

Das Doppeldiaphragma-Verfahren unterscheidet sich von dem Einfachdiaphragma-Verfahren im Wesentlichen dadurch, dass das Laminat 40 zwischen zwei Membranen positioniert und vakuum-evakuiert wird. Auf diese Weise werden die einzelnen Lagen des Laminats 40 bereits zueinander fixiert. Das gesamte Paket aus den zwei Diaphragmen und dem Gelege wird anschließend, wie bereits anhand des SD-Verfahrens erläutert, erwärmt und umgeformt.

Das optional vorgesehene Warm-Umformen des FVW-Vorformlings 1 kann gemäß einem weiteren Ausführungsbeispiel der Erfindung mittels einem Press- oder Biegeumformverfahren vorgenommen werden (nicht dargestellt). Bei einem Pressumformverfahren zur Umformung des Vorformlings 1 wird das Laminat 40 zwischen einem negativ und einem positiv Werkzeug durch Pressen unter Temperatureinwirkung umgeformt. Zur Herstellung des Vorformlings 1 mit einem Biegeumformverfahren wird ein Laminat 40 auf einem Tisch liegend um einen Kante umgekantet. Hierzu werden Platten verwendet, die das Laminat auf der Ober- und Unterseite ohne starke Pressung umfassen. Anschließend wird ein Endabschnitt 44, 45 des Laminats 40 mittels einer Schwenkbewegung der Platten um die Kante gebogen.

Erfindungsgemäß wird der vorgekrümmte oder nicht vorgekrümmte Vorformling 1 mittels der Bewegung einer Klemmvorrichtung 16, 17, in der zumindest ein Endabschnitt 44, 45 eingespannt ist, insbesondere ein in Längsrichtung LR gesehen innen oder vor der Klemmvorrichtung, d.h. in Richtung zu dem mittleren Bereich gelegener Bereich 46 bzw. 47 durch Anlage an einen gerundeten Oberflächenbereich 58 bzw. 59 eines Formstücks 20 angewinkelt, wobei mittels der Klemmvorrichtung quer zur Drehachse oder Bewegungsbahn der Klemmvorrichtung eine Zugkraft auf das Laminat ausgeübt wird (Figuren 3 sowie 7 und 8).

Die zumindest eine Klemmvorrichtung 16, 17 ist vorzugsweise in einer Aufnahmevorrichtung 14 bzw. 15 integriert, in die der jeweilige Endabschnitt des Laminats aufgenommen werden kann. Die Klemmvorrichtung 16, 17 weist vorzugsweise Laminatklemmen mit zwei Klemmwangen 25a, 25b auf, die auf das Laminat 40 oder den FVW-Vorformling 1 eine Kraft F in Laminat-Längsrichtung LR ausüben können. Die Klemmvorrichtung 16, 17 kann die Endabschnitte 44, 45 des Laminats 40 gegebenenfalls mittels Klemmen derart halten, dass sich die Lagen 2a, 2b, 2c im Bereich der Endabschnitte 44, 45 insbesondere in Längsrichtung LR nicht relativ zueinander bewegen können.

In dem vor der Klemmvorrichtung gelegenen Bereich 46 bzw. 47 bildet sich also in der Nähe des jeweiligen eingespannten Endabschnitts 44, 45 ein zweiter Krümmungsbereich 68 bzw. 69 aus (Figur 8), der vom jeweiligen eingespannten Endabschnitt 44 bzw. 45 aus gesehen, weiter innen, d.h. in Richtung zum gerundeten Oberflächenbereich 58, 59 hin liegt (sofern eine Vorverformung stattfindet). Während der Verformung des Laminats (Figuren 5 und 6) durch die Bewegung und Ausübung einer Zugkraft durch die Klemmvorrichtung 16, 17 werden die Endabschnitte 44, 45 des Vorformlings 1 mittels jeweils einer der Klemmeinrichtungen 14, 16 derart fixiert, dass die Laminatschichten 2a, 2b, 2c am Laminatende des Vorformlings zumindest nicht in Zugrichtung aufeinander abgleiten können.

Da bei diesem Vorverformungsverfahren in einer Bearbeitungsrichtung gesehen die Breite B des Umformkems 50 größer ist als die in dieser Richtung wirksame Breite b des Formstücks 20 (Figur 7), ist die unter der Zugkraft entstehende Schenkellänge L zwischen dem jeweiligen Schenkelende 42, 43 und dem entstehenden Krümmungsbereich 68, 69 des Laminats 40 größer als die Schenkellänge I des Vorformling-Laminats zwischen den Schenkelenden 42, 43 und der an der Umformkern 50 ausgebildeten Krümmungsbereich 48, 49 (siehe Figuren 6 und 8). Die Biegeradien R des Umformkerns 50 können insbesondere derart ausgebildet, das diese den Biegeradien r des Formstücks 20 entsprechen.

An der Aufnahmevorrichtung 14, 15 kann an der dem Formstück 20 zugewandten Seite eine Anlagefläche 12 bzw.13 vorgesehen sein, die insbesondere an der dem Laminat zugewandten Seite gerundet ausgebildet sein kann, deren Krümmungsachse quer zur Zugrichtung verläuft. Diese Anlagefläche kann mit einer entsprechenden Gestaltung insbesondere vorgesehen sein, um bei Ausübung einer Zugkraft F diese auf den Vorformling zu übertragen, ohne diesen zu beeinträchtigen. Eine entsprechend gerundete Anlagefläche 12, 13 kann auch dazu vorgesehen sein, bei der Bildung des Ausgangs-Vorformlings 2 diesem eine Krümmung 48, 49 zu verleihen, was alternativ oder zusätzlich zum Verfahren gemäß Figuren 5, 6 mit dem Umformkern50 erfolgen kann.

Das Anwinkeln des Endabschnitts gegenüber dem neben dem Endabschnitt gelegenen Bereich zur Bildung eines Ausgangs-Vorformlings kann auch durch Drehung der ersten Klemmvorrichtung um eine Achse erfolgen, bei der der von der ersten Klemmvorrichtung aufgenommene Abschnitt des Laminats in seiner Längsrichtung gegenüber dem Bereich gewinkelt wird, der außerhalb der ersten Klemmvorrichtung und vor dieser gelegen ist.

Bei der Bildung des Ausgangs-Vorformlings muss die Krümmungsachse nicht geradlinig sein, da es sich auch um ein in der Längsrichtung gekrümmtes Bauteil handeln kann. Der Verlauf der Krümmungsachse bei der Bildung eines Ausgangs-Vorformlings muss auch nicht parallel zu der Krümmungsachse des Laminats verlaufen, die bei der Verformung mit der Klemmvorrichtung unter Ausübung der Zugkraft vorgesehen ist.

Weiterhin muss der Winkel, in den bei dem Beispiel der Figuren 5 und 6 bei der Bildung des Ausgangs-Vorformlings der Endabschnitt und der innen liegende Bereich 46 bzw. 47 zueinander gebracht werden, in Längsrichtung I gesehen nicht gleich dem Winkel sein, in dem nach weiterer Umformung des Laminats mittels der Klemmvorrichtungen und dem Umformkem 50 ein von dem jeweils ersten Krümmungsbereich 48 bzw. 49 aus gesehen weiter innen liegenden Krümmungsbereich (in der Figur 8 der mittlere Bereich) und den jeweils eingespannten Endabschnitten zueinander verlaufen. In dem in den Figuren 6 und 8 dargestellten Beispiel ist dies jedoch der Fall, da in dem vorbereitenden Schritt wie in dem mit den Klemmvorrichtungen ausgeführten Verfahrensschritt ein rechter Winkel in Längrichtung des Laminats gesehen ausgebildet wird. In diesem Beispiel kann insbesondere der Winkel, um den der in der ersten Klemmvorrichtung gelegene Endabschnitt gegenüber dem vor der ersten Klemmvorrichtung gelegene Bereich des Laminats gedreht ist, im Bereich ±10 Grad gleich dem Winkel sein, in dem die zweite Seitenfläche gegenüber der Auflagefläche verläuft.

Die Längsrichtung LR ist generell auch die Richtung, in der die Klemmvorrichtungen Zugkräfte ausüben, wobei sich die Längsrichtung insbesondere aus der Verbindungslinie der Mitten der eingespannten Endabschnitte ergeben kann.

Bei dem Verfahren kann der Endabschnitt gegenüber dem neben dem Endabschnitt gelegenen Bereich mittels eines Formkerns angewinkelt werden.

Generell kann vorgesehen sein, dass insbesondere während der Verformung des Laminats durch die Klemmvorrichtung unter Ausübung einer Zugkraft eine weitere Verformung des Laminats durchgeführt wird. Z.B. kann vorgesehen sein, dass die Auflagefläche 33 des Formstücks 20 dreidimensional verformt ist und z.B. Erhöhungen, Riffelungen, Durchsetzungen, Rampen o.ä. aufweist. Derartige Konturflächen können auch an einer oder beiden Seitenflächen 34, 35 vorgesehen sein. Bei Ausübung der Zugkraft auf das Laminat wird der Abschnitt, der entlang einer derartigen Auflagefläche 33 bzw. einer oder beiden derartigen Seitenflächen 34, 35 verläuft, durch Andrücken an diese dreidimensional verformt. Bei entsprechender Formgebung der Auflagefläche bzw. einer oder beiden Seitenflächen kann dabei auch eine zumindest bereichsweise Verschiebung von Lagen des Laminats zueinander ereicht werden. Auf diese Weise können etwa Ausformungen wie z.B. Hinterschneidungen oder auch Verzerrungen des Laminats erreicht werden.

Vorzugsweise verläuft die Richtung der Zugkraft F, quer zur Zugkraft gesehen, möglichst genau in der Längsrichtung des Laminats 40 zwischen den jeweiligen Klemmvorrichtungen, die die Zugkraft F ausüben, oder einer Anlagefläche 12, 13 und einem gerundeten Oberflächenbereich 58, 59.

Desweiteren kann bei der Bewegung der zumindest einen Klemmvorrichtung 16, 17 oder Aufnahmevorrichtung 14, 15 unter Ausübung einer Zugkraft eine Bewegungsbahn 62, 63 derart eingestellt sein, dass das Laminat bzw. der von der Klemmvorrichtung 16, 17 aufgenommene Endabschnitt 44, 45 als Ganzes in der Klemmvorrichtung verrutscht und/oder dass Lagen innerhalb des Endabschnitts 44, 45 zueinander verrutschen. Dies ist insbesondere dann der Fall, wenn der Verlauf der Anlagefläche 12, 13 und/oder des gerundeten Abschnitts 58, 59 sowie die Lage und Bewegung der jeweiligen Klemmvorrichtung 16, 17 relativ dazu eine quer zur Zugkraft gerichtete Verschiebungskraft des Laminats gegenüber der Klemmvorrichtung bewirkt.

Die Bewegung der Klemmvorrichtungen bzw. der Aufnahmevorrichtungen erfolgt relativ zu dem gerundeten Abschnitt 58, 59, der vor der jeweiligen Klemmvorrichtung eine Krümmung bildet. Dabei können auch mehrere gerundete Oberflächenbereiche am Formstück vorgesehen sein, um mehrere Krümmungen am Laminat zu bilden.

Die Bewegungssteuerung der Aufnahmevorrichtungen 14, 15 entlang der jeweiligen Bewegungsbahn 62 bzw. 63 kann manuell oder automatisch, z.B. mittels einer nicht dargestellten CNC-Steuerung einer Betätigungsvorrichtung erfolgen. Während dieser Bewegung gleiten die Schichten 2a, 2b, 2c zwischen der jeweiligen Klemmvorrichtung 14, 16 und dem zumindest einen gerundeten Oberflächenbereich 58, 59 aufeinander ab. Dabei wird die Bewegungsbahn 62, 63 und die Richtung und Größe der Zugkraft F derart gewählt, dass die Lagen 2a, 2b, 2c insbesondere während der Bewegung der zumindest einen Klemmvorrichtung unter einer Zugspannung stehen, so dass ein Ausbeulen oder Aufwerfen von Lagen oder des Laminates nicht auftritt.

Die Herstellungsvorrichtung weist hierzu eine Bewegungsmechanik (nicht dargestellt) auf, die mittels der Betätigungsvorrichtung (nicht dargestellt) ansteuerbar und an der eine oder mehrere Aufnahmevorrichtungen 14, 15 oder Klemmvorrichtungen 16, 17 nach der Erfindung gekoppelt sind. Die Bewegungsmechanik ist derart gestaltet, dass die jeweilige Aufnahmevorrichtung 14, 15 oder Klemmvorrichtung 16, 17 eine vorbestimmte Zugkraft gegen die Richtung, die zur zweiten Aufnahmevorrichtung weist, aufbringen kann und gleichzeitig eine Bewegung relativ zur Formstück-Aufnahme ausführen kann.

Weiterhin kann vorgesehen sein, dass mit der Bewegungsmechanik eine Antriebsvorrichtung gekoppelt ist, die mittels der Betätigungsvorrichtung ansteuerbar und an der die Klemmvorrichtung oder die Aufnahmevorrichtung gekoppelt ist, wobei die Bewegungsmechanik und die Antriebsvorrichtung derart gestaltet sind, dass die jeweilige Aufnahmevorrichtung eine vorbestimmte Zugkraft gegen die Richtung, die zur zweiten Aufnahmevorrichtung weist, aufbringen kann und gleichzeitig eine Bewegung relativ zur Formstück-Aufnahme ausführen kann. Für jede Aufnahmevorrichtung kann eine eigene Bewegungsmechanik vorgesehen sein oder es kann für mehrere Aufnahmevorrichtungen oder Klemmvorrichtungen eine Bewegungsmechanik vorgesehen sein. Ebenso kann die Antriebsvorrichtung oder die Betätigungsvorrichtung jeweils mit mehreren Aufnahmevorrichtungen oder Klemmvorrichtungen gekoppelt sein. Insbesondere kann vorgesehen sein, dass die Betätigungsvorrichtung auch die Klemmvorrichtung betätigt.

Die von der Bewegungsmechanik ausgeführte Bewegung kann dabei in einer Ebene gelegen sein. Die Antriebsvorrichtung kann geeignet sein, während der von der Bewegungsmechanik ausgeführten Bewegung auf das Laminat eine Zugkraft mit einem vorbestimmten Betrag auszuüben. Die Zugkraft kann mittels einer insbesondere mit der Antriebsvorrichtung gekoppelten Federeinrichtung aufgebracht werden, mit der eine Mindest-Zugkraft während der Umform-Bewegung erhalten bleibt. Auch kann die Bewegungsmechanik derart gestaltet sein, dass die Bewegungsbahn einstellbar ist. Die Bewegungsbahn kann dabei bogenförmig sein. Weiterhin kann die erste Aufnahmevorrichtung eine Drehvorrichtung aufweisen, mit der die erste Aufnahmevorrichtung um eine Achse, die quer zur Verbindung zwischen der ersten und der zweiten Aufnahmevorrichtung verläuft, drehbar ist. Bei dem Vorsehen von mehreren Aufnahmevorrichtungen kann vorgesehen sein, dass diesen Drehvorrichtungen zugeordnet sind, deren Drehachsen nicht parallel zueinander verlaufen. Die Drehung der Aufnahmevorrichtung mit einer Drehvorrichtung kann insbesondere bei Ausführung der Bewegungsbahn 62, 63 ausgeführt werden.

Dass die Aufnahmevorrichtung oder die Klemmvorrichtung eine erfindungsgemäße Zugkraft auf das Laminat ausüben, kann eine Herstellungsvorrichtung mit der Antriebsvorrichtung einer Federeinrichtung gekoppelt sein, mit der die Zugkraft aufgebracht wird, und die Bewegungsmechanik kann die Aufnahmevorrichtung derart verfahren, dass die Feder während der Ausführung der Bewegungsbahn gespannt bleibt, so dass eine Mindest-Zugkraft während des Umformens erhalten bleibt.

Die Bewegungsmechanik der jeweiligen Aufnahmevorrichtung kann insbesondere derart gestaltet sein, dass die Bewegungsbahn einstellbar ist. Insbesondere kann vorgesehen sein, dass die Herstellungsvorrichtung derart gestaltet ist, dass eine Zugkraft in Richtung des vor der jeweiligen Klemmvorrichtung oder Aufnahmevorrichtung freiliegenden Abschnitts ausgeübt wird und gleichzeitig eine vorgegebene Bewegungsbahn ausgeführt wird. Generell kann die Bewegungsbahn der jeweiligen Aufnahmevorrichtung bogenförmig oder paraboloid verlaufen.

Bei dem Vorsehen von zwei oder mehr als zwei Aufnahmevorrichtungen 14, 15 müssen diese in der Herstellungsvorrichtung nicht einander gegenüberliegend angeordnet sein. Die Herstellungsvorrichtung kann auch eine oder mehrere zusätzliche Klemm- oder Einspannvorrichtungen aufweisen, die nicht zur Ausführung einer Bewegungsbahn 62, 63 vorgesehen sind, d.h. statisch in der Herstellungsvorrichtung angeordnet sind.

In dem Fall, dass eine der Klemmvorrichtungen nicht bewegbar ist oder bei einem Verfahrensschritt nicht bewegt wird, kann diese Klemmvorrichtung auch durch übliche Einspann- oder Spannmittel realisiert sein.

## Patentansprüche

1. Verfahren zur Herstellung eines Faserverbundwerkstoff-Vorformlings, auch FVW-Vorformling genannt aus einem Laminat (40) mit insgesamt zumindest zwei Trockenfasergewebe-Lagen (Li, La), das mit Bindern zusammengehalten wird, und/oder Prepreg-Lagen (Li, La), aufweisend die Schritte:
■ Einspannen eines ersten Randabschnitts (44) des Laminats (40) in eine mittels einer Bewegungsmechanik gegenüber einem Formstück (20) bewegbare erste Klemmvorrichtung (16) und eines entgegengesetzt zu dem ersten Randabschnitt (44) gelegenen zweiten Randabschnitts (45) des Laminats (40) in eine zweite Klemmvorrichtung (17), wobei die erste Klemmvorrichtung (16) von der zweiten Klemmvorrichtung (17) aus gesehen jenseits eines gerundeten Oberflächenbereichs (58) des Formstücks (20) gelegen ist,
■ Ausüben einer Zugkraft (F) von der ersten Klemmvorrichtung (16) gegenüber der zweiten Klemmvorrichtung (17) über den zwischen den Klemmvorrichtungen gelegenen Bereich des Laminats hinweg, wobei die erste Klemmvorrichtung (16) in eine vorbestimmte Richtung bewegt wird, so dass das Formstück (20) durch seinen gerundeten Oberflächenbereich (58) dem Laminat (40) zwischen der ersten Klemmvorrichtung (16) und der zweiten Klemmvorrichtung (17), in Längsrichtung (LR) des Laminats gesehen, eine Krümmung (48) aufprägt,
■ wobei die Klemmkräfte in der ersten und der zweiten Klemmvorrichtung (16, 17) so groß sind, dass kein Gleiten der Laminat-Lagen (Li, La) relativ zueinander erlaubt wird.

2. Verfahren zur Herstellung eines FVW-Vorformlings nach Anspruch 1, wobei die erste Klemmvorrichtung (16) nach unten und in Richtung einer der ersten Klemmvorrichtung (16) zugewandten ersten Seitenfläche (34) des Formstücks (20) bewegt wird, bis das Laminat (40) abschnittsweise an der ersten Seitenfläche (34) anliegt.

3. Verfahren zur Herstellung eines FVW-Vorformlings nach einem der voranstehenden Ansprüche,wobei,
■ dass vor dem Einspannen des ersten Randabschnitts (44) des Laminats (40) in die erste Klemmvorrichtung (16) der erste Randabschnitt (44) gegenüber dem neben dem ersten Randabschnitt gelegenen Bereich (46) unter Ausbildung eines zwischen diesen Bereichen gelegenen Krümmungsbereichs (48) angewinkelt ist und dabei die Lagen (Li, La) aufgrund der Krümmung zueinander versetzt sind, und
■ dass die Lagen (Li, La) des ersten Randabschnitts (44) in dieser versetzten Auflage in der ersten Klemmvorrichtung (16) zusammen geklemmt werden.

4. Verfahren zur Herstellung eines FVW-Vorformlings nach dem Anspruch 3, wobei, dass das Abwinkeln des ersten Randabschnitts (44) gegenüber dem neben dem Randabschnitt gelegenen Bereich (46) durch Drehung der ersten Klemmvorrichtung (16) um eine Achse erfolgt, bei der der von der ersten Klemmvorrichtung (16) aufgenommene Abschnitt des Laminats (40) in seiner Längsrichtung (LR) gegenüber dem Bereich gewinkelt wird, der außerhalb der ersten Klemmvorrichtung (16) und vor dieser gelegen ist, wobei eine geringere Klemmkraft eingestellt ist, die aufgrund der Drehung der Lagen eine Versetzung der Lagen zueinander erlaubt.

5. Verfahren zur Herstellung eines FVW-Vorformlings nach einem der voranstehenden Ansprüche, wobei, bei dem Bewegen der ersten Klemmvorrichtung (16) mittels einer weiteren Bewegungsmechanik auch die zweite Klemmvorrichtung (17), die von der ersten Klemmvorrichtung (16) aus gesehen jenseits eines weiteren zweiten gerundeten Oberflächenbereichs (59) des Formstücks (20) gelegen ist, in einer Richtung entgegengesetzt zur Bewegungsrichtung der ersten Klemmvorrichtung (16) bis zu einer Stelle bewegt wird, an der der zweite gerundete Oberflächenbereich ( 59) des Formstücks (20), der von der ersten Klemmvorrichtung (16) aus gesehen jenseits des ersten gerundeten Oberflächenbereichs (58) gelegen ist, dem Laminat (40) zwischen dem ersten gerundeten Oberflächenbereich (58) und der zweiten Klemmvorrichtung (17) - in dessen Längsrichtung (LR) gesehen - eine Krümmung aufprägt.

6. Verfahren zur Herstellung eines FVW-Vorformlings nach dem Anspruch 5, wobei die Bewegung der zweiten Klemmvorrichtung (17) gleichzeitig zur Bewegung der ersten Klemmvorrichtung (16) erfolgt.

7. Verfahren zur Herstellung eines FVW-Vorformlings nach dem Anspruch 5 oder 6, wobei das Bewegen der weiteren zweiten Klemmvorrichtung (17) eine Bewegung der weiteren zweiten Klemmvorrichtung (17) in Richtung einer entgegen gesetzt zur ersten Seitenfläche (34) gelegenen und der zweiten Klemmvorrichtung (17) zugewandten zweiten Seitenfläche (35) des Formstücks (20) nach unten umfasst, bis das Laminat (40) abschnittsweise an der zweiten Seitenfläche (35) anliegt.

8. Verfahren zur Herstellung eines FVW-Vorformlings nach einem der voranstehenden Ansprüche 5 bis 7, wobei
■ vor dem Einspannen des zweiten Randabschnitts (45) des Laminats (40) in die zweite Klemmvorrichtung (17) der zweite Randabschnitt (45) gegenüber dem neben dem zweiten Randabschnitt gelegenen Bereich (47) unter Ausbildung eines zwischen diesen Bereichen gelegenen Krümmungsbereichs (49) angewinkelt ist und dabei die Lagen aufgrund der Krümmung zueinander versetzt sind, und
■ dass die Lagen des Randabschnitts (45) in dieser versetzten Auflage in der zweiten Klemmvorrichtung (17) zusammen geklemmt werden.

9. Verfahren zur Herstellung eines FVW-Vorformlings nach dem Anspruch 8, wobei die Länge des zweiten Randabschnitts (45) so gering ist, dass eine Versetzung der Lagen des Randabschnitts (45) ohne Bildung von Beulen oder eines Aufwerfens einer inneren Lage (Li) stattfindet.

10. Verfahren zur Herstellung eines FVW-Vorformlings nach einem der voranstehenden Ansprüche 8 oder 9, wobei das Abwinkeln des zweiten Randabschnitts (45) gegenüber dem neben dem Randabschnitt (47) gelegenen Bereich durch Drehung der zweiten Klemmvorrichtung (17) um eine Achse erfolgt, bei welcher der von der zweiten Klemmvorrichtung (17) aufgenommene zweite Randabschnitt (45) des Laminats (40) in seiner Längsrichtung (LR) gegenüber dem Bereich gewinkelt wird, der außerhalb der zweiten Klemmvorrichtung (17) und vor dieser gelegen ist.

11. Herstellungsvorrichtung zur Verformung eines Halbzeugs zur Herstellung eines FVW-Bauteils, aufweisend:
■ eine Formstück-Aufnahme zur Aufnahme eines Formstücks (20) für die Umformung des Halbzeugs,
■ eine erste (14) und eine zweite (15) Aufnahmevorrichtung jeweils zur Aufnahme eines Randabschnitts (44, 45) eines Laminats (40), welche jeweils eine Klemmvorrichtung (16, 17) zum Einklemmen des Halbzeugs (40) aufweisen, die jeweils auf die Randabschnitte (44, 45) des Laminats (40) derartige Klemmkräfte ausüben können, dass sich die Lagen (2a, 2b, 2c) des Halbzeugs (40) im Bereich der Randabschnitte (44, 45) nicht relativ zueinander bewegen,
■ eine Bewegungsmechanik, die mittels einer Betätigungsvorrichtung ansteuerbar und an welche die erste Aufnahmevorrichtung (14) gekoppelt ist, wobei die Bewegungsmechanik derart gestaltet ist, dass die erste Aufnahmevorrichtung (14) eine vorbestimmte Zugkraft (F) gegen die Richtung, die zur zweiten Aufnahmevorrichtung (15) weist, aufbringen kann und gleichzeitig eine Bewegung relativ zur Formstück-Aufnahme ausführen kann.

12. Herstellungsvorrichtung nach dem Anspruch 11, wobei mit der Bewegungsmechanik eine Antriebsvorrichtung gekoppelt ist, die mittels der Betätigungsvorrichtung ansteuerbar und an der die erste Aufnahmevorrichtung (14) gekoppelt ist, wobei die Bewegungsmechanik und die Antriebsvorrichtung derart gestaltet sind, dass die erste Aufnahmevorrichtung (14) eine vorbestimmte Zugkraft (F) gegen die Richtung, die zur zweiten Aufnahmevorrichtung (15) weist, aufbringen kann und gleichzeitig eine Bewegung relativ zur Formstück-Aufnahme ausführen kann.

13. Herstellungsvorrichtung zur Verformung eines Halbzeugs nach dem Anspruch 12, wobei an der Antriebsvorrichtung eine Federeinrichtung zur Aufbringung einer Zugkraft (F) gekoppelt ist, mit der eine Mindest-Zugkraft (F) während des Umformens erhalten bleibt.

14. Herstellungsvorrichtung zur Verformung eines Halbzeugs nach einem der voranstehenden Ansprüche 11 bis 13, wobei an die zweite Aufnahmevorrichtung (15) eine Bewegungsmechanik gekoppelt ist, die mittels einer Betätigungsvorrichtung ansteuerbar ist, wobei die Bewegungsmechanik und die Antriebsvorrichtung derart gestaltet sind, dass die zweite Aufnahmevorrichtung (15) eine vorbestimmte Zugkraft (F) gegen die Richtung, die zur ersten Aufnahmevorrichtung weist, aufbringen kann und gleichzeitig eine Bewegung relativ zur Formstück-Aufnahme ausführen kann.

## Claims

1. A method for manufacturing a fiber composite material parison, also named FC parison, out of a laminate (40) with a total of at least two dry fibrous tissue layers (Li, La), which is held together with binders, and/or prepreg layers (Li, La), with the following steps:
■ mounting a first edge section (44) of the laminate (40) in a first clamping device (16) that can be moved relative to a fitting (20) by means of a mechanical gearing, and a second edge section (45) of the laminate (40) lying opposite the first edge section in a second clamping device (17), wherein the first clamping device (16) is situated on the other side of a rounded surface area (58) of the fitting (20) as viewed from the other clamping device (17),
■ exerting a tensile stress (F) from the first clamping device (16) relative to the second clamping (17) device over the area of the laminate (40) lying between the clamping devices, wherein the first clamping device (16) is moved in a predetermined direction, so that the rounded surface area (58) of the fitting (20) imparts to the laminate (40) a curvature (48) between the first clamping device (16) and second clamping device (17) as viewed in the longitudinal direction (LR) of the laminate,
■ wherein the clamping forces in the first and second clamping device (16, 17) are high enough to prevent the laminate layers (Li, La) from sliding relative to each other.

2. The method for manufacturing an FC parison of claim 1, wherein the first clamping device 16) is moved downward towards a first lateral surface (34) of the fitting (20) facing the first clamping device (16) until the laminate (40) sectionally abuts the first lateral surface (34).

3. The method for manufacturing an FC parison of one of the preceding claims, wherein,
■ before mounting the edge section (44) of the laminate (40) in the first clamping device (16), the first edge section (44) be angled relative to the area (46) situated next to the edge section with the formation of a curved area (48) lying between these areas, wherein the curvature causes the layers (Li, La) to be offset in relation to each other, and
■ the layers (Li, La) of the first edge section ( 44) are clamped together in the first clamping device (16) in this offset arrangement.

4. The method for manufacturing an FC parison of claim 3, wherein the edge section (44) is angled in relation to the area (46) situated next to the edge section (44) by turning the first clamping device (16) around an axis at which the section of the laminate (40) taken up by the first clamping device (16) is angled in its longitudinal direction relative to the area lying outside of the first clamping device (16) and in front of it, wherein a lower clamping force is set, which makes it possible to shift the layers relative to each other due to the turning of the layers.

5. The method for manufacturing an FC parison of one of the preceding claims, wherein, when moving the first clamping device (16) by means of another mechanical gearing, the second clamping device (17) lying beyond another second rounded surface area (59) of the fitting (20) as viewed from the first clamping device (16) is also set in motion in a direction opposite the direction of motion of the first clamping device (16) up to a location where the second rounded surface area (59) of the fitting (20) lying beyond the first surface area (58) as viewed from the first clamping device (16) imparts to the laminate (40) a curvature between the first rounded surface area (58) and the second clamping device (17)- as viewed in its longitudinal direction.

6. The method for manufacturing an FC parison of claim 5, wherein the motion of the second clamping device (17) takes place simultaneously to the motion of the first clamping device (16).

7. The method for manufacturing an FC parison of claim 5 or 6, wherein the motion of the additional second clamping device (17) encompasses a downward motion of the additional clamping device (17) towards a second lateral surface (35) of the fitting (20) lying opposite the first lateral surface (34) and facing the second clamping device (17), until the laminate (40) sectionally abuts the second lateral surface (35).

8. The method for manufacturing an FC parison of one of the preceding claim 5 to 7, wherein
■ before mounting the second edge section (44) of the laminate (40) in the second clamping device (17), the second edge section (45) is angled relative to the area (47) situated next to the second edge section with the formation of a curved area (49) lying between these areas, wherein the curvature causes the layers to be offset in relation to each other, and
■ the layers of the edge section (45) are clamped together in the second clamping device (17) in this offset arrangement.

9. The method for manufacturing an FC parison of claim 8, wherein the length of the second edge section (44) is so small that the layer of the edge section (45) shifts without warping an interior layer (Li).

10. The method for manufacturing an FC parison of one of the preceding claims 8 or 9, wherein the second edge section (45) is angled relative to the area situated next to the edge section (45) by turning the second clamping device (17) around an axis, at which the second edge section (45) of the laminate (40) taken up by the second clamping device (17) is angled in its longitudinal direction (LR) in relation to the area lying outside the second clamping device (17) and in front of it.

11. A manufacturing device for deforming a semi-finished product in order to fabricate an FC component, which has:
■ a fitting retainer for accommodating a fitting (20) for forming of the semi-finished product,
■ a first (14) and second (15) retaining device for respectively accommodating an edge section (44, 45) of a laminate (40), which each have a clamping device (16, 17) for clamping the semi-finished product (40), which each may exert such clamping forces to the edge sections (44, 45) of the laminate (40) that the layers (2a, 2b, 2c) of the semi-finished product (40) in the area of the edge sections (44, 45) are excluded from moving towards relatively to each other.
■ a mechanical gearing that can be activated by means of an actuator and is coupled to the first retaining device (14), wherein the mechanical gearing is designed in such a way that the first retaining device (14) can apply a predetermined tensile stress (F) opposite the direction pointing to to the second retaining device (15), and simultaneously execute a motion relative to the fitting retainer.

12. The manufacturing device of claim 11, wherein the mechanical gearing is coupled with a driving device, which can be activated by means of the actuator, and is coupled with the first retaining device (14), wherein the mechanical gearing and driving device are configured in such a way that the first retaining device (14) can apply a predetermined tensile stress (F) opposite the direction pointing to the second retaining device (15), and simultaneously execute a motion relative to the fitting retainer.

13. The manufacturing device for deforming a semi-finished product of claim 12, wherein the driving device is coupled with a spring arrangement for applying a tensile stress (F), which maintains a minimum tensile stress (F) during the forming process.

14. The manufacturing device for deforming a semi-finished product of one of the preceding claims 11 to 13, wherein the second retaining device (15) is coupled with a mechanical gearing, which can be activated by means of an actuator, wherein the mechanical gearing and driving device are designed in such a way that the second retaining device (15) can apply a predetermined tensile stress (F) opposite the direction pointing to the first retaining device, and simultaneously execute a motion relative to the fitting retainer.

## Revendications

1. Procédé de fabrication d'une ébauche en matériau composite renforcé par fibres, également appelée ébauche FVW, à partir d'un stratifié (40) comportant au total au moins deux couches de tissé de fibres sèches (Li, La) maintenues ensemble par des liens, et/ou des couches préimprégnées (Li, La), présentant les étapes :
■ de serrage d'un premier tronçon de bord (44) du stratifié (40) dans un premier dispositif de serrage (16) mobile via une mécanique de mouvement par rapport à une pièce moulée (20) et d'un second tronçon de bord (45) du stratifié (40) opposé au premier tronçon de bord (44) dans un second dispositif de serrage (17), sachant que le premier dispositif de serrage (16) est placé au-delà d'une zone de surface arrondie (58) de la pièce moulée (20), vu depuis le second dispositif de serrage (17),
■ d'exercice d'une force de traction (F) du premier dispositif de serrage (16) par rapport au second dispositif de serrage (17) sur la zone du stratifié placée entre les dispositifs de serrage, sachant que le premier dispositif de serrage (16) est déplacé dans une direction prédéterminée, de façon à ce que la pièce moulée (20), du fait de sa zone de surface arrondie (58) imprime une courbe (48) au stratifié (40) entre le premier dispositif de serrage (16) et le second dispositif de serrage (17), vu dans le sens longitudinal (LR) du stratifié,
■ sachant que les forces de serrage dans les premier et second dispositifs de serrage (16, 17) sont si élevées qu'elles ne permettent aucun glissement des couches de stratifié (Li, La) l'une par rapport à l'autre.

2. Procédé de fabrication d'une ébauche FVW selon la revendication 1, dans lequel le premier dispositif de serrage (16) est déplacé vers le bas et en direction d'une première face latérale (34) de la pièce moulée (20) tournée vers le premier dispositif de serrage (16), jusqu'à ce que le stratifié (40) repose par tronçons sur la première face latérale (34).

3. Procédé de fabrication d'une ébauche FVW selon la revendication 1 ou 2, dans lequel
■ qu'avant le serrage du premier tronçon de bord (44) du stratifié (40) dans le premier dispositif de serrage (16), le premier tronçon de bord (44) est plié par rapport à la zone (46) placée près du premier tronçon de bord par la formation d'une zone de courbure (48) placée entre ces zones, ce qui fait que les couches (Li, La) sont décalées l'une par rapport à l'autre du fait de la courbure, et
■ que les couches (Li, La) du premier tronçon de bord (44) sont collées ensemble dans cette position décalée dans le premier dispositif de serrage (16).

4. Procédé de fabrication d'une ébauche FVW selon la revendication 3, dans lequel le pliage du premier tronçon de bord (44) par rapport à la zone (46) placée près du tronçon d'extrémité s'effectue par rotation du premier dispositif de serrage (16) sur un axe, dans lequel le tronçon du stratifié (40) reçu par le premier dispositif de serrage (16) est plié dans son sens longitudinal (LR) par rapport à la zone qui est placée hors du premier dispositif de serrage (16) et devant celui-ci, sachant qu'une force de serrage plus faible est réglée, laquelle permet un décalage des couches entre elles du fait de la rotation des couches.

5. Procédé de fabrication d'une ébauche FVW selon l'une des revendications précédentes, dans lequel lors du déplacement du premier dispositif de serrage (16) via une mécanique de déplacement supplémentaire, le second dispositif de serrage (17) qui est placé vu du premier dispositif de serrage (16) au-delà d'une seconde zone de surface arrondie supplémentaire (59) de la pièce moulée (20), est déplacé dans une direction opposée à la direction de mouvement du premier dispositif de serrage (16) jusqu'à un point auquel la seconde zone de surface arrondie supplémentaire (59) de la pièce moulée (20) qui est placée au-delà de la première zone de surface arrondie (58) vu du premier dispositif de serrage (16), imprime une courbure au stratifié (40) entre la première zone de surface arrondie (58) et le second dispositif de serrage (17), vu dans son sens longitudinal (LR).

6. Procédé de fabrication d'une ébauche FVW selon la revendication 5, dans lequel le mouvement du second dispositif de serrage (17) s'effectue en même temps que le mouvement du premier dispositif de serrage (16).

7. Procédé de fabrication d'une ébauche FVW selon la revendication 5 ou 6, dans lequel le déplacement du second dispositif de serrage (17) supplémentaire comprend un mouvement du second dispositif de serrage (17) supplémentaire vers le bas en direction d'une seconde surface latérale (35) de la pièce moulée (20) tournée en direction du second dispositif de serrage (17) opposée à la première surface latérale (34), jusqu'à ce que le stratifié (40) repose par tronçons sur la seconde surface latérale (35).

8. Procédé de fabrication d'une ébauche FVW selon l'une des revendications précédentes 5 à 7, dans lequel
■ qu'avant le serrage du second tronçon de bord (45) du stratifié (40) dans le second dispositif de serrage (17), le second tronçon de bord (45) est plié par rapport à la zone (47) placée près du second tronçon d'extrémité par la formation d'une zone de courbure (49) placée entre ces zones, ce qui fait que les couches sont décalées l'une par rapport à l'autre du fait de la courbure, et
■ que les couches du tronçon de bord (45) sont collées ensemble dans cette position décalée dans le second dispositif de serrage (17).

9. Procédé de fabrication d'une ébauche FVW selon la revendication 8, dans lequel la longueur du second tronçon de bord (45) est si petite, qu'un décalage des couches du tronçon de bord (45) a lieu sans formation de bosses ou de soulèvement d'une couche intérieure (Li).

10. Procédé de fabrication d'une ébauche FVW selon l'une des revendications précédentes 8 ou 9, dans lequel le pliage du second tronçon de bord (45) par rapport à la zone placée près du tronçon d'extrémité (47) s'effectue par rotation du second dispositif de serrage (17) sur un axe, dans lequel le second tronçon de bord (45) du stratifié (40) reçu par le second dispositif de serrage (17) est pliée dans son sens longitudinal (LR) par rapport à la zone qui est placée hors du second dispositif de serrage (17) et devant celui-ci.

11. Dispositif de production pour former un produit semi-fini pour produire une pièce FVW, présentant :
■ une réception de pièce moulée pour recevoir une pièce moulée (20) pour former le produit semi-fini,
■ un premier (14) et un second (15) dispositifs de réception respectivement pour recevoir un tronçon de bord (44, 45) d'un stratifié (40) qui présentent respectivement un dispositif de serrage (16, 17) pour serrer le produit semi-fini (40), lesquels peuvent exercer de telles forces de serrage respectivement sur les tronçons de bord (44, 45) du stratifié (40) que les couches (2a, 2b, 2c) du produit semi-fini (40) ne se déplacent pas l'une par rapport à l'autre au niveau des tronçons de bord (44, 45),
■ une mécanique de mouvement qui peut être réglée via un dispositif d'actionnement et à laquelle le premier dispositif de réception (14) est couplé, sachant que la mécanique de mouvement est ainsi formée que le premier dispositif de réception (14) peut exercer une force de traction (F) prédéterminée contre le sens qui oriente vers le second dispositif de réception (15), et exécuter en même temps un mouvement par rapport à la réception de pièce.

12. Dispositif de production selon la revendication 11, dans lequel un dispositif d'entraînement est couplé à la mécanique de mouvement, qui peut être commandée via le dispositif d'actionnement et sur laquelle le premier dispositif de réception (14) est couplé, sachant que la mécanique de mouvement et le dispositif d'entraînement sont ainsi formés que le premier dispositif de réception (14) peut exercer une force de traction (F) prédéterminée contre le sens qui oriente vers le second dispositif de réception (15), et exécuter en même temps un mouvement par rapport à la réception de pièce.

13. Dispositif de production pour former un produit semi-fini selon la revendication 12, dans lequel un dispositif de ressort est couplé au dispositif d'entraînement pour appliquer une force de traction (F) avec laquelle une force de traction minimale (F) est maintenue pendant la formation.

14. Dispositif de production pour former un produit semi-fini selon l'une des revendications 11 à 13, dans lequel une mécanique de mouvement est couplée au second dispositif de réception (15) qui peut être commandée via un dispositif d'actionnement, sachant que la mécanique de mouvement et le dispositif d'entraînement sont ainsi formés que le premier dispositif de réception (14) peut exercer une force de traction (F) prédéterminée contre le sens qui oriente vers le premier dispositif de réception, et exécuter en même temps un mouvement par rapport à la réception de pièce.
